# EUROPEAN PATENT APPLICATION

(11) **EP 4 513 388 A1**
(43) Date of publication of application: **26.02.2025**
(21) Application number: 23193579.2
(22) Date of filing: 25.08.2023
(51) Int. Cl.: G06N 5/02, G06N 20/00

(54) **SYSTEM AND METHOD FOR DETERMINING ONE OR MORE PERFORMANCE INDICATOR VALUES FOR A PLURALITY OF PHYSICAL COMPONENTS IN A TECHNICAL INSTALLATION**

(71) Applicant: Siemens Aktiengesellschaft, 80333 München (DE)
(72) Inventor: N, Madhusudanan, 560036 Bengaluru, Karnataka (IN); Antony, Elvis, 90429 Nürnberg (DE)
(74) Representative: Isarpatent

(57) **Abstract**

Disclosed is an engineering system (102) and a method (400) for determining one or more performance indicator values for a plurality of physical components (108A-108N) in a technical installation (106) to be visualized in a multi-layered manner. The method comprises receiving, by a processing unit (202), a request to determine one or more performance indicator values associated with one or more physical components in the technical installation (106), determining one or more physical components associated with the one or more performance indicators based on analysis of an engineering design and corresponding engineering project of the technical installation, determining a first knowledge graph from a second knowledge graph, and determining, the requested one or more performance indicator values using a trained machine learning model on the first knowledge graph.

## Description

The present invention relates to a field of engineering of computer assisted programming, and more particularly relates to a method and system for determining one or more performance indicator values for a plurality of physical components in a technical installation to be visualized in a multi-layered manner.

A technical installation such as an industrial plant comprises one or more devices which is controlled by one or more engineering objects. Examples of the one or more engineering objects may include, for example, a programmable logic controller, one or more field devices, or any other automation devices. Examples of the one or more devices includes but is not limited to, control valves, motors, pumps, and actuators.

The one or more engineering objects control the one or more devices by execution of an engineering program which may be stored in a memory. The engineering program may include a plurality of machine readable instructions to control the one more devices. The engineering program is coded by taking into account of a plurality of parameters associated with the one or more devices, the one or more engineering objects, and the technical installation. Examples of the plurality of parameters includes, but is not limited to a processing speed and a memory capability of the one or more engineering objects, one or more physical properties of the one or more devices, a plurality of physical connections between the one or more engineering objects and the one or more devices, and an industrial domain of operation of the technical installation. The industrial domain of the technical installation is indicative of an objective of the technical installation. For example, the technical installation may be a manufacturing plant to manufacture glass bottles. In such a case, the industrial domain of the technical installation may be "glass manufacturing industry". Similarly, examples of the industrial domain may include, but is not limited to a "oil refining industry", "a food processing industry" and "a coal mining industry". A plurality of functions of the one or more engineering objects may vary based on the industrial domain of the technical installation.

In the technical installation, the various physical components of the technical installation are to be monitored continuously for a smooth operation in the factory or the industry. Conventionally, there are various tools that can be used to monitor a performance of various physical components in the technical installation. For example, it may be possible for a plant manager to know the areas of high temperature (as recorded by sensors) on a visualization tool that monitors various locations. Similarly, a line manager may be able to monitor in real time various metrics related to the machines in that line. The are several diagnostic tools and dashboards that are useful to present this information to span across an entire geography at a time and where this aggregation over a given space is predetermined when building the dashboarding application. Also, there is the possibility for multiple level of detailed visualization of information where it is possible to expose only a portion of information based on the context of the scale that the viewer is seeing. However, this is limited to frameworks where there is data present in the system that is explicitly available such as sensor data and measured data from machines that are observable.

On the other hand, when engineering programs or codes are authored that are used to program the behavior of controllers, the impact of the complexity and efficiency of the code on the KPIs of the factory floor are not very well measured. For example, there could be a relation between the frequency of running a given function block and the wear-out of a machine component which is not reflected accurately by current dashboards. Another example is the amount of delay in response due to the complexity of data structures in the block that are slow to load and run on the PLC.

However, there are no existing tools to directly measure the factors that influence the factory floor activities. More importantly, the measurement and usage of such factors is also largely static where available. That is, such metrics need not only be pinned to a single machine or a line but can also be aggregative in nature. For example, a metric like energy consumption of the machines should be able to be viewed by the user at different levels which is currently lacking in present systems. Therefore, for such a flexible means of representing information that relates to the IECPL code blocks that drives this equipment, a suitable representation of the underlying information is needed.

In light of the above, there exists a need for systems and mechanisms that can explore a large industrial automation projects and engineering programs by determining one or more performance indicator values for several physical components and then visualizing the same in a multi-layered manner.

Therefore, it is an object of the present invention to provide a system and method for determining one or more performance indicator values for a plurality of physical components in a technical installation to be visualized in a multi-layered manner.

The object of the present invention is achieved by a method for determining one or more performance indicator values for a plurality of physical components in a technical installation to be visualized in a multi-layered manner.

The object of the invention is achieved by a method for determining one or more performance indicator values for a plurality of physical components in a technical installation to be visualized in a multi-layered manner. The method comprising receiving a request to determine one or more performance indicator values associated with one or more physical components in the technical installation. The request comprises information regarding performance indicators. The method comprises determining one or more physical components associated with the one or more performance indicators based on analysis of an engineering design and corresponding engineering project of the technical installation. The method comprises determining a first knowledge graph from a second knowledge graph. Herein, the second knowledge graph is an integrated knowledge graph having one or more engineering objects representing one or more physical components semantically linked to corresponding engineering programs in an engineering project associated with one or more engineering objects, and wherein the first knowledge graph is a sub-graph of the second knowledge graph corresponding to the determined one or more physical components associated with the one or more performance indicators. The method comprises determining the requested one or more performance indicator values using a trained machine learning model on the first knowledge graph. In an embodiment, the method of generating the second knowledge graph based on an ontology schema comprises identifying a plurality of engineering objects from the engineering design based on an analysis of the engineering design. The method of generating the second knowledge graph based on an ontology schema comprises identifying a plurality of code statements from the engineering projects based on an analysis of the engineering projects. The method of generating the second knowledge graph based on an ontology schema comprises semantically linking the code statements to corresponding engineering objects based on the one or more rules associated with the one or more relationships between the one or more engineering objects of the engineering design and the one or more engineering programs of the engineering project based on the ontology schema. The method of generating the second knowledge graph based on an ontology schema comprises creating edges from the one or more code statements to corresponding engineering objects based on the semantic linking to generate the second knowledge graph.

In an embodiment, the first knowledge graph comprises a plurality of layers. Herein, the plurality of layers comprise a first knowledge graph layer comprising knowledge associated with the one or more physical components at a plant level in the technical installation, a second knowledge graph layer comprising knowledge associated with one or more physical components at a line level in the technical installation, a third knowledge graph layer comprising knowledge associated with one or more physical components at a station level in the technical installation, a fourth knowledge graph layer comprising knowledge associated with one or more physical components at a cell level in the technical installation, and a fifth knowledge graph layer comprising knowledge associated with one or more physical components at a machine level in the technical installation.

In an embodiment, the method further comprises visualizing the performance indicator values associated with one or more physical components in the industrial environment as an information map. Herein, the information map comprises multi-layered information clustered into the one or more knowledge graph layers based on the request of the user.

In an embodiment, the method of visualizing the performance indicator values as the information map comprises navigating the one or more performance indicator values from plant level data to machine level data by navigating through the one or more knowledge graph layers in the first knowledge graph.

In an embodiment, the machine learning model is trained to predict the one or more performance indicator values associated with the one or more physical components based on a correlation between the second knowledge graph and pre-determined performance indicator values corresponding to the one or more physical components. The performance indicator value is calculated based on one or more sensors associated with the one or more physical components.

The object of the present invention is also achieved by an engineering system for determining energy consumption value corresponding to execution of engineering projects associated with one or more engineering objects in a technical installation comprises. The engineering system comprises one or more processor(s), and a memory coupled to the one or more processor(s). The memory comprises a module stored in the form of machine-readable instructions executable by the one or more processor(s), wherein the module is capable of performing aforementioned method steps.

The object of the present invention is also achieved by an industrial environment comprising an engineering system, a technical installation comprising one or more physical component, and one or more client devices communicatively coupled to the engineering system via a network. Herein, the engineering system is configured to perform aforementioned method steps.

The object of the present invention also achieved by a computer-program product, having machine-readable instructions stored therein, that when executed by a processor(s), cause the processor(s) to perform the aforementioned method steps.

The object of the present invention is also achieved by a computer-readable storage medium comprising instructions which, when executed by one or more processing units cause the one or more processing units to perform aforementioned method steps.

The present invention is further described hereinafter with reference to illustrated embodiments shown in the accompanying drawings, in which:
- FIG 1: illustrates a block diagram of an industrial environment capable of determining one or more performance indicator values for a plurality of physical components in a technical installation to be visualized in a multi-layered manner, in accordance with an embodiment of the present invention;
- FIG 2: illustrates a block diagram of an engineering system, such as those shown in FIG 1, in which an embodiment of the present invention can be implemented, in accordance with an embodiment of the present invention;
- FIG 3: is a block diagram of the module, such as those shown in FIG 2, in which an embodiment of the present invention can be implemented, in accordance with an embodiment of the present invention;
- FIG 4: illustrates an exemplary method for determining one or more performance indicator values for a plurality of physical components in a technical installation to be visualized in a multi-layered manner, in accordance with an embodiment of the present invention;
- FIG 5: illustrates an exemplary graphical user interface depicting first knowledge graph representing information in a multi-layered manner, in accordance with an embodiment of the present invention;
- FIG 6: illustrates an exemplary machine learning model workflow, in accordance with an embodiment of the present invention; and
- FIG 7: illustrates an example of a Graphical User Interface providing performance indicator values at different levels in the technical installation, in accordance with an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

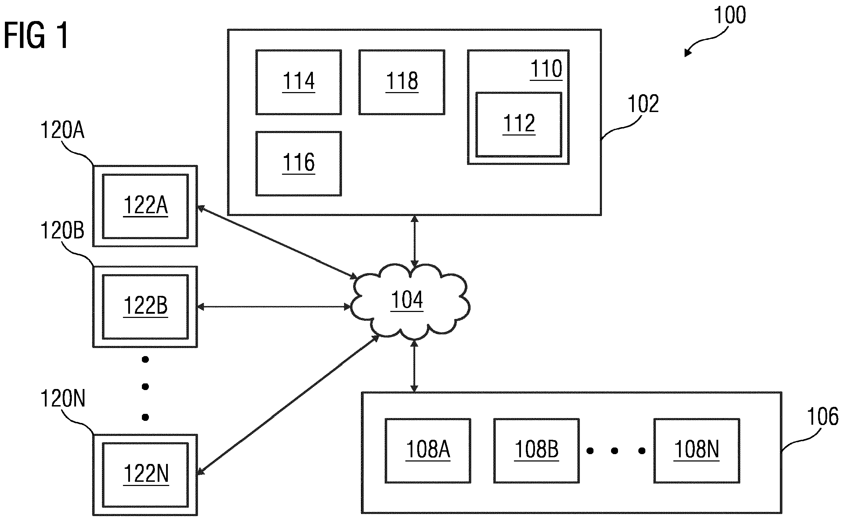

FIG 1 is a block diagram of an industrial environment 100 capable of determining one or more performance indicator values for a plurality of physical components in a technical installation to be visualized in a multi-layered manner, according to an embodiment of the present invention. In FIG 1, the industrial environment 100 includes an engineering system 102, a technical installation 106 and one or more client devices 120A-N. As used herein, "industrial environment" refers to a processing environment comprising configurable computing physical and logical resources, for example, networks, servers, storage, applications, services, etc., and data distributed over a platform, such as cloud computing platform. The industrial environment 100 provides on-demand network access to a shared pool of the configurable computing physical and logical resources. The engineering system 102 is communicatively connected to the technical installation 106 via the network 104 (such as Local Area Network (LAN), Wide Area Network (WAN), Wi-Fi, Internet, any short range or wide range communication). The engineering system 102 is also connected to the one or more client devices 120A-N via the network 104.

The engineering system 102 is connected to the one or more physical component(s) 108A-N in the technical installation 106 via the network 104. The one or more physical component (s) 108A-N may include servers, robots, switches, automation devices, programmable logic controllers (PLC)s, human machine interfaces (HMIs), motors, valves, pumps, actuators, sensors and other industrial equipment(s). The one or more physical component(s) 108A-N may be connected to each other or several other components (not shown in FIG 1) via physical connections. The physical connections may be through wiring between the one or more physical component(s) 108A-N. Alternatively, the one or more physical component(s) 108A-N may also be connected via non-physical connections (such as Internet of Things (IOT)). Although, FIG 1 illustrates the engineering system 102 connected to one technical installation 106, one skilled in the art can envision that the engineering system 102 can be connected to several technical installations 106 located at different geographical locations via the network 104.

The client devices 120A-N may be a desktop computer, laptop computer, tablet, smart phone and the like. Each of the client devices 120A-N is provided with an engineering tool 122A-N for generating and/or editing engineering projects respectively. The client devices 120A-N may enable users to download the engineering project version of the engineering project and create a client version of the engineering project. The client devices 120A-N can access the engineering system 102 for automatically determining energy consumption values corresponding to execution of engineering projects associated with the engineering design in the technical installation. In an embodiment, the client devices 120A-N comprises an engineering system capable of running an industrial automation application. The client devices 120A-N can access cloud applications (such as providing performance visualization of the one or more physical component (s) 108A-N via a web browser. Throughout the specification, the terms "client device" and "user device" are used interchangeably.

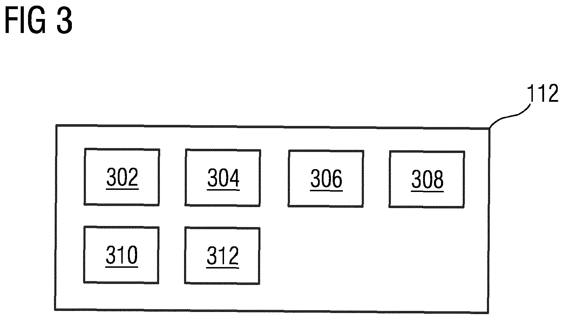

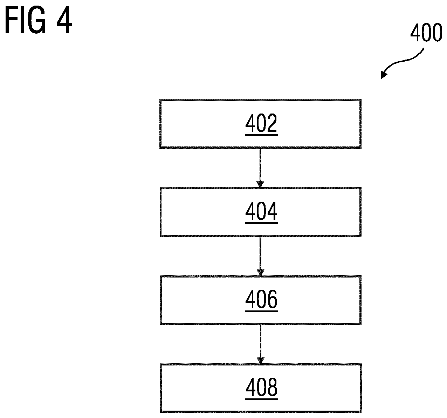

The engineering system 102 may be a standalone server deployed at a control station or may be a remote server on a cloud computing platform. In a preferred embodiment, the engineering system 102 may be a cloud-based engineering system. The engineering system 102 is capable of delivering applications (such as cloud applications) for managing a technical installation 106 comprising one or more physical component(s) 108A-N. The engineering system 102 may comprise a platform 110(such as a cloud computing platform), an automation module 112, a server 114 including hardware resources and an operating system (OS), a network interface 116 and a database 118. The network interface 116 enables communication between the engineering system 102, the technical installation 106, and the client device(s) 120A-N. The interface (such as cloud interface) (not shown in FIG 1) may allow the engineers at the one or more client device(s) 120A-N to access engineering project files stored at the engineering system 102 and perform one or more actions on the engineering project files at same instance. The server 114 may include one or more servers on which the OS is installed. The servers 114 may comprise one or more processors, one or more storage devices, such as, memory units, for storing data and machine-readable instructions for example, applications and application programming interfaces (APIs), and other peripherals required for providing computing (such as cloud computing) functionality. The platform 110 enables functionalities such as data reception, data processing, data rendering, data communication, etc. using the hardware resources and the OS of the servers 114 and delivers the aforementioned services using the application programming interfaces deployed therein. The platform 110 may comprise a combination of dedicated hardware and software built on top of the hardware and the OS. In an exemplary embodiment, the platform 110 may correspond to an Integrated Development Environment (IDE) comprising program editors and compilers which allow the users of the client devices 120A-N to develop engineering programs and/or projects. The platform 110 may further comprise a module 112 configured for determining one or more performance indicator values for a plurality of physical components in a technical installation to be visualized in a multi-layered manner. Details of the module 112 is explained in FIG. 3 and FIG. 4.

The database 118 stores the information relating to the technical installation 106 and the client device(s) 120A-N. The database 118 is, for example, a structured query language (SQL) data store or a not only SQL (NoSQL) data store. In an exemplary embodiment, the database 118 may be configured as cloud-based database implemented in the industrial environment 100, where computing resources are delivered as a service over the platform 110. The database 118, according to another embodiment of the present invention, is a location on a file system directly accessible by the module 112. The database 118 is configured to store engineering project files, engineering designs, prediction model, parameter values associated with the one or more physical component(s) 108A-N, test results, simulation results, status messages, one or more simulation instances, graphical programs, program logics, program logic patterns, engineering objects and engineering object properties, one or more engineering object blocks, relationship information between the engineering objects, requirements, program update messages and the like.

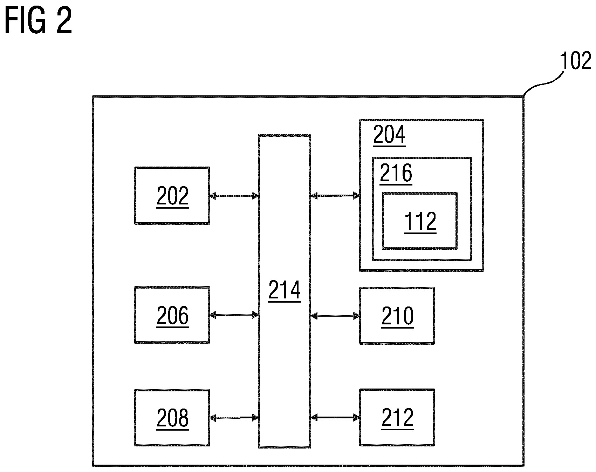

FIG 2 is a block diagram of an engineering system 102, such as those shown in FIG 1, in which an embodiment of the present invention can be implemented. In FIG 2, the engineering system 102 includes a processor(s) 202, an accessible memory 204, a storage unit 206, a communication interface 208, an input-output unit 210, a network interface 212 and a bus 214.

The processor(s) 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processor(s) 202 may also include embedded controllers, such as generic or programmable logic devices or arrays, application specific integrated circuits, single-chip computers, and the like.

The memory 204 may be non-transitory volatile memory and nonvolatile memory. The memory 204 may be coupled for communication with the processor(s) 202, such as being a computer-readable storage medium. The processor(s) 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes an integrated development environment (IDE) 216. The IDE 216 includes the module 112 stored in the form of machine-readable instructions on any of the above-mentioned storage media and may be in communication with and executed by the processor(s) 202.

When executed by the processor(s) 202, the module 112 causes the processor(s) 202 to determining one or more performance indicator values for a plurality of physical components in a technical installation to be visualized in a multi-layered manner. In an embodiment, the module 112 causes the processor(s) 202 to receive a request to determine one or more performance indicator values associated with one or more physical components in the technical installation 106. The request comprises information regarding performance indicators. The performance indicators are quantifiable metrics that are used to assess the performance, efficiency, and overall health of the plant's operations, processes, and systems. These performance indicators provide valuable insights into various aspects of the plant's functioning, helping stakeholders make informed decisions and take actions to optimize its performance and productivity. Based on the request, the module 112 causes the processor(s) 202 to determine one or more physical components associated with the one or more performance indicators based on analysis of an engineering design and corresponding engineering project of the technical installation. The engineering design comprises one or more engineering objects representing one or more physical components 108A-N in the technical installation 106. The one or more engineering objects comprises one or more physical components 108A-N in a portion of the technical installation 106, physical connections between the one or more physical components 108A-N, and a plurality of parameter values associated with the one or more physical components 108A-N and the physical connections.

The engineering project comprises a plurality of engineering programs. The engineering project is configured to control operation of a plurality of devices in a technical installation. Examples of the plurality of devices include but is not limited to, programmable logic controllers, computers, motor drivers, control units, microcontrollers, human machine interfaces, edge servers, and industrial control systems. Each of the plurality of engineering programs are configured to control operation of one or more devices of the plurality of devices in the technical installation. For efficient control of the plurality of devices, the plurality of engineering programs may have to be coded based on specific conventions and constraints that are aligned with one or more requirements of the plurality of devices of the technical installation.

Upon receiving request, the module 112 causes the processing units 202 to determine a first knowledge graph from a second knowledge graph. The second knowledge graph is an integrated knowledge graph having one or more engineering objects representing one or more physical components semantically linked to corresponding engineering programs in an engineering project associated with one or more engineering objects. The first knowledge graph is a sub-graph of the second knowledge graph corresponding to the determined one or more physical components associated with the one or more performance indicators. The second knowledge graph which is the integrated knowledge graph generated based on an ontology schema known in the art. The second knowledge graph is generated by generating an engineering design knowledge graph and an engineering project knowledge graph. For the brevity of the disclosure, the method of generation of the engineering design knowledge graph and the engineering project knowledge graph is not disclosed here. The details of generation of an engineering design knowledge graph and an engineering project knowledge graph can be referred from the following applications: EP/20172367.3 and EP/21168907.0.

In an embodiment, the ontology schema can be expressed in the W3C standard-based Web Ontology Language (OWL) that allows to express the domain with control flow and data flow between several engineering objects and code blocks in an engineering program along with the inter-relationships, enriched by underlying axioms and restrictions. Semantic Web uses a combination of modal and ontology languages to provide the capabilities of an ontology. The ontology uses a predefined, reserved vocabulary to define classes and relationships between them for a particular region of interest or more. The Resource Description Framework Schema (RDFS) (e.g., RDF vocabulary description language 1.0: RDF schema) defined by the world Wide Web Consortium (W3C) provides a specific vocabulary for Resource Description Frameworks (RDFs) that can be used to define classes and attributes. The Web ontology language (OWL) expands the RDFS vocabulary with additional resources that can be used to build more expression ontologies for the Web. RDF is a framework for representing information in the web. RDF is essentially a data model. Its basic building block is a resource attribute value triple, called a statement. RDF has been given XML, JSON, etc. syntax.

In an embodiment, in generating the second knowledge graph based on an ontology schema, the module 112 causes the processing unit 202 to identify a plurality of engineering objects from the engineering design based on an analysis of the engineering design. Further, the module 112 causes the processing unit 202 to identify a plurality of code statements from the engineering projects based on an analysis of the engineering projects. Further, the module 112 causes the processing unit 202 to semantically link the code statements to corresponding engineering objects based on the one or more rules associated with the one or more relationships between the one or more engineering objects of the engineering design and the one or more engineering programs of the engineering project based on the ontology schema. Further, the module 112 causes the processing unit 202 to create edges from the one or more code statements to corresponding engineering objects based on the semantic linking to generate the second knowledge graph.

Further, in determining the first knowledge graph from the second knowledge graph, the module 112 causes the processing unit to determine a plurality of layers. The plurality of layers comprises a first knowledge graph layer comprising knowledge associated with the one or more physical components at a plant level in the technical installation (106), a second knowledge graph layer comprising knowledge associated with one or more physical components at a line level in the technical installation (106), a third knowledge graph layer comprising knowledge associated with one or more physical components at a cell level in the technical installation (106), and a fourth knowledge graph layer comprising knowledge associated with one or more physical components at a machine level in the technical installation (106).

Further, the module 112 causes the processing unit 202 to determine the requested one or more performance indicator values using a trained machine learning model on the first knowledge graph. In determining the one or more performance indicators, the module 112 causes the processing unit 202 to train the machine learning model to predict the one or more performance indicator values associated with the one or more physical components based on a correlation between the second knowledge graph and pre-determined performance indicator values corresponding to the one or more physical components. Herein, the performance indicator value is calculated based on one or more sensors associated with the one or more physical components.

Further, the module 112 causes the processing unit 202 to visualize the performance indicator values associated with one or more physical components in the industrial environment as an information map, wherein the information map comprises multi-layered information clustered into the one or more knowledge graph layers based on the request of the user.

Further, the module 112 causes the processing unit 202 to visualize the performance indicator values as the information map comprises navigating the one or more performance indicator values from plant level data to machine level data by navigating through the one or more knowledge graph layers in the first knowledge graph.

The storage unit 206 may be a non-transitory storage medium configured for storing a database (such as database 118) which comprises server version of the engineering designs.

The communication interface 208 is configured for establishing communication sessions between the one or more client devices 120A-N and the engineering system 102. The communication interface 208 allows the one or more engineering applications running on the client devices 120A-N to import/import engineering project files into the engineering system 102. In an embodiment, the communication interface 208 interacts with the interface at the one or more client devices 120A-N for allowing the engineers to access the engineering designs associated with an engineering project file and perform one or more actions on the engineering designs stored in the engineering system 102.

The input-output unit 210 may include input devices a keypad, touch-sensitive display, camera (such as a camera receiving gesture-based inputs), etc. capable of receiving one or more input signals, such as user commands to process engineering project file. Also, the input-output unit 210 may be a display unit for displaying a graphical user interface which visualizes the behavior model associated with the modified engineering designs and also displays the status information associated with each set of actions performed on the graphical user interface. The set of actions may include execution of predefined tests, download, compile and deploy of graphical programs. The bus 214 acts as interconnect between the processor 202, the memory 204, and the input-output unit 210.

The network interface 212 may be configured to handle network connectivity, bandwidth and network traffic between the engineering system 102, client devices 120A-N and the technical installation 106.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of an engineering system 102 as is unique to the present disclosure or necessary for an understanding of the present disclosure is depicted and described. The remainder of the construction and operation of the engineering system 102 may conform to any of the various current implementation and practices known in the art.

FIG 3 is a block diagram of the module 112, such as those shown in FIG 2, in which an embodiment of the present invention can be implemented. In FIG 3, the automation module 112 comprises a request handler module 302, a second knowledge graph generation module 304, an assessment module 306, a first knowledge graph generation module 308, a performance indicator value prediction module 310, and a visualization module 312.

The request handler module 302 is configured for receiving the engineering design, and the engineering projects associated with the engineering design of the technical installation 106. The engineering design comprises one or more engineering objects representing one or more physical components 108A-N in the technical installation 106. The one or more engineering objects comprises one or more physical components 108-N in a portion of the technical installation 106, physical connections between the one or more physical components 108AN, and a plurality of parameter values associated with the one or more physical components 108A-N and the physical connections. The received engineering design comprises information related to the one or more physical components 108A-N, physical connections between the one or more physical components 108A-N, and a plurality of performance indicator values associated with the one or more physical components 108A-N and the physical connections. For example, the engineering design is received from one of the one or more users external to the industrial environment 100 via a network. In alternative embodiment, the engineering design is received from the one or the one or more client devices 120A-N via the network.

It should be understood that the representation of one or more physical components 108A-N in the portion of the technical installation 106, physical connections between the one or more physical components 108A-N, and a plurality of performance indicator values associated with the one or more physical components 108A-N and the physical connections, which are comprised in the received engineering design are configured in the engineering system 102 using the engineering project.

The request handler module 302 is configured to receive the engineering project associated with the engineering design of the technical installation. The engineering project comprises a plurality of engineering programs which further comprises a set of programming code blocks. Each set of programming code block further comprises data structures, functions, variables and so forth. The engineering project is configured to control operation of a plurality of devices in a technical installation. Examples of the plurality of devices include but is not limited to, programmable logic controllers, computers, motor drivers, control units, microcontrollers, human machine interfaces, edge servers, and industrial control systems. Each of the plurality of engineering programs are configured to control operation of one or more devices of the plurality of devices in the technical installation. Each of the plurality of engineering programs are configured to control operation of one or more devices of the plurality of devices in the technical installation. For efficient control of the plurality of devices, the plurality of engineering programs may have to be coded based on specific conventions and constraints that are aligned with one or more requirements of the plurality of devices of the technical installation 106. It should be noted that a particular engineering program can be coded in a plurality of different ways to achieve the same one or more requirements of the plurality of devices.

Further, the request handler module 302 is also configured for receiving a request to determine one or more performance indicator values associated with one or more physical components in the technical installation. The one or more requests maybe determination and visualization of performance indicators such as energy consumption values for one or more engineering objects, heat radiation values for one or more engineering objects, efficiency of one or more physical components across different levels in the technical installation and so forth.

The second knowledge graph generation module 304 is configured for generating an integrated knowledge graph having one or more engineering objects representing one or more physical components semantically linked to corresponding engineering programs in an engineering project associated with one or more engineering objects. The second knowledge graph generation module 304 is configured for generating the second knowledge graph based on an ontology schema. The ontology schema comprises information about relationships between the programming code blocks and the one or more engineering objects. The ontology schema also comprises information about data flow and control flow between each of the programming code blocks and the one or more engineering objects. For this purpose, an engineering design knowledge graph is generated, and an engineering project knowledge graph is generated and then semantically linked with each other to generate the integrated knowledge graph. The engineering design knowledge graph is generated by identifying a plurality of engineering objects from the engineering design based on an analysis of the engineering design. The engineering project knowledge graph is generated by identifying a plurality of code statements from the engineering projects based on an analysis of the engineering projects. The engineering design knowledge graph is a semantic representation of the engineering design comprising information about the data flow and the control flow between the one or more engineering objects and relationships therebetween. The engineering project knowledge graph is a semantic representation of the engineering project comprising information about the data flow and control flow between the set of programming code blocks and relationships therebetween. The engineering design knowledge graph i.e. the engineering design is logically superimposed with the engineering project knowledge graph i.e. the corresponding engineering project. By "logically superimposed" is meant that the integrated knowledge graph or the first knowledge graph is a representation of the one or more engineering objects semantically linked to corresponding engineering programs. The second knowledge graph generation module 304 is configured for the code statements to corresponding engineering objects based on the one or more rules associated with the one or more relationships between the one or more engineering objects of the engineering design and the one or more engineering programs of the engineering project based on the ontology schema.. The ontology schema comprises information about relationships between the programming code blocks and the one or more engineering objects. The ontology schema also comprises information about data flow and control flow between each of the programming code blocks and the one or more engineering objects. Further the ontology schema comprises one or more rules associated with one or more relationships between the one or more engineering objects of the engineering design and the one or more engineering programs of the engineering project.

To generate the integrated knowledge graph or the second knowledge graph, second knowledge graph generation module 304 is configured for identifying a plurality of engineering objects from the engineering design based on an analysis of the engineering design. The analysis of the plurality of engineering objects comprises determining a type of the one or more physical components 108A-N, one or more physical connections between the one or more physical components 108AN, and a plurality of parameter values associated with the one or more physical components 108A-N and the physical connections. The type of the one or more engineering objects comprises function blocks, function calls, data blocks, user defined data types, Programmable logic controller (PLCs), hardware configuration, parameter values, and the like. The step of identification is achieved by analyzing the engineering design knowledge graph associated with an engineering object structurally in terms of, control flow, data flow, data usage. Specifically, property values embedded in all engineering objects are read in order to analyze the engineering design knowledge graph associated with the engineering object. In the preferred embodiment, the parameter values comprise motor configuration parameters, network and communication parameter, valve controls, temperature or pressure values of a sensor, speed, torque and the like.

Similarly, the second knowledge graph generation module 304 is configured for identifying a plurality of code statements from the engineering projects based on the analysis of the engineering projects. The analysis of the engineering projects comprises determining a type of engineering program. The type of engineering programs comprises different data structures, functions, variables, declarations, statements and the like. The step of identification is achieved by analyzing the engineering project knowledge graph associated with an engineering program structurally in terms of, control flow, data flow, data usage. The plurality of code statements comprises assignment statements, program element definition statements, and operation statements. In an example, the second knowledge graph generation module 304 is configured for determining the plurality of code statements by application of a natural language processing algorithm on the plurality of engineering programs of the plurality of engineering projects. Furthermore, a dataflow and a control flow between each of the determined plurality of code statements is determined based on an analysis of the plurality of code statements. The data flow indicates a transformation of values of a plurality of data variables in the plurality of engineering programs. The control flow comprises information about a sequence in which the plurality of code statements are executed. For example, the control flow comprises information about statements which will be repeatedly executed by, because of the presence of looped and recursive statements in the plurality of engineering programs.

Further, the second knowledge graph generation module 304 is configured for semantically linking the code statements to corresponding engineering objects based on the one or more rules associated with the one or more relationships between the one or more engineering objects of the engineering design and the one or more engineering programs of the engineering project. In a preferred embodiment, based on the identification of types of engineering objects and types of engineering programs from the engineering design knowledge graph and engineering project knowledge graph respectively, a similarity confidence score is calculated, by the second knowledge graph generation module 304. Based on the similarity confidence, a first set of nodes in the engineering design knowledge graph is linked to a second set of nodes in the engineering project knowledge graph, thereby generating the integrated knowledge graph. In other words, the second knowledge graph generation module 304 is configured for creating edges from the one or more code statements to corresponding engineering objects based on the semantic linking to generate the second knowledge graph In an example, a node in the engineering design knowledge graph representing a temperature sensor will be linked to a one or more nodes in the engineering project knowledge graph representing the software functionality of the sensor in the engineering project knowledge graph.

The assessment module 306 is configured for determining the one or more physical components associated with the one or more performance indicators based on analysis of the engineering design and corresponding engineering project of the technical installation. In an example, the request from the user comprises one or more performance indicators, such as heat dissipation from motors in the factory floor, then the assessment module 306 analyzes engineering design and corresponding engineering project in order to identify all the motors in the factory floor. Then, the assessment module 306 is configured for identifying all motors in the factory floor by analyzing the engineering design of the factory floor.

The first knowledge graph generation module 308 is configured for determining a first knowledge graph from the second knowledge graph generated by the second knowledge graph generation module 304. The first knowledge graph is a sub-graph of the second knowledge graph corresponding to the determined one or more physical components associated with the one or more performance indicators. The first knowledge graph is generated by analyzing the one or more nodes in the second knowledge graph that are associated with one or more physical components determined by the assessment module 306. The first knowledge graph generation module 308 is configured for identifying all the nodes in the first knowledge graph that correspond to the determined one or more physical components associated with the one or more performance indicators. It should be understood that the first knowledge graph is a subset of the second knowledge graph that is generated based on the request of the user.

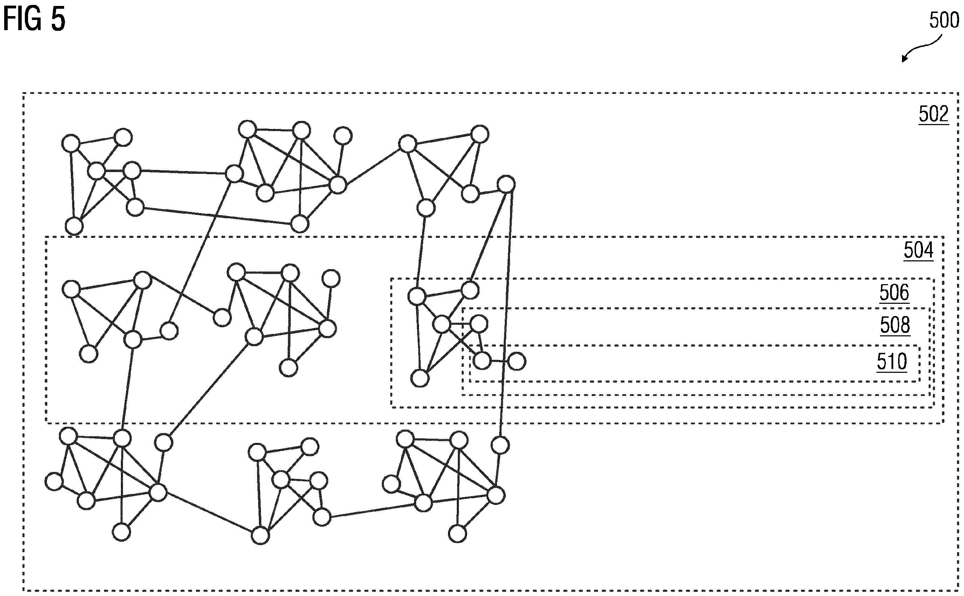

Referring to FIG 5, illustrated is an exemplary graphical user interface 500 depicting first knowledge graph representing information in a multi-layered manner, in accordance with an embodiment of the present invention. As may be seen the first knowledge graph comprises a plurality of layers 502, 504, 506, 508 and 510. In an embodiment, the first knowledge graph comprises a first knowledge graph layer 502 comprising knowledge associated with the one or more physical components at a plant level in the technical installation 106. The first knowledge graph comprises a second knowledge graph layer 504 comprising knowledge associated with one or more physical components at a line level in the technical installation 106. The first knowledge graph comprises a third knowledge graph layer 506 comprising knowledge associated with one or more physical components at a station level in the technical installation 106. The first knowledge graph comprises a fourth knowledge graph layer 508 comprising knowledge associated with one or more physical components at a cell level in the technical installation 106. The first knowledge graph comprises a fifth knowledge graph layer 510 comprising knowledge associated with one or more physical components at a machine level in the technical installation 106.

The performance indicator value prediction module 310 is configured for determining one or more performance indicator values using a trained machine learning model on the first knowledge graph. Throughout the present disclosure, the term "machine learning model' as used herein refers to a prediction model given a set of training dataset. In general, each individual sample of the training data is a pair containing a dataset (e.g., performance indicator value such as energy consumption value corresponding to an engineering program and the first knowledge graph) and a desired output value or dataset (e.g., performance indicator value such as energy consumption values for a particular engineering program). The machine learning model analyzes the training data and produces a predictor function. The predictor function, once derived through training, is capable of reasonably predicting or estimating the correct output value given an input use case as a particular first knowledge graph. Exemplary machine learning models may include artificial intelligence model such as deep neural network, convolutional neural network, LSTM models and the like. Herein, the 'trained machine learning model' refers to any machine learning model that is configured or trained for determining an outcome of a specific task such as energy consumption of a particular engineering program. Notably, the set of machine learning models in stored in the database in the back-end of the server.

In particular, the machine learning model is trained to predict the performance indicator value of the engineering project and/or engineering programs therein based on a correlation between the second knowledge graph and pre-determined performance indicator value corresponding to the one or more engineering programs. Herein, the performance indicator value is received from sensors associated with one or more engineering objects. It should be understood that the sensors are associated with one or more physical components in the technical installation. The sensors are configured to continuously monitor various performance indicators for different physical components in the technical installation. The performance indicator data as received from sensors in then correlated with one or more engineering objects and corresponding one or more engineering programs in the second knowledge graph. The performance indicator value is then used for training the machine learning model to predict the performance indicator value for one or more physical components in the first knowledge graph as requested by the user.

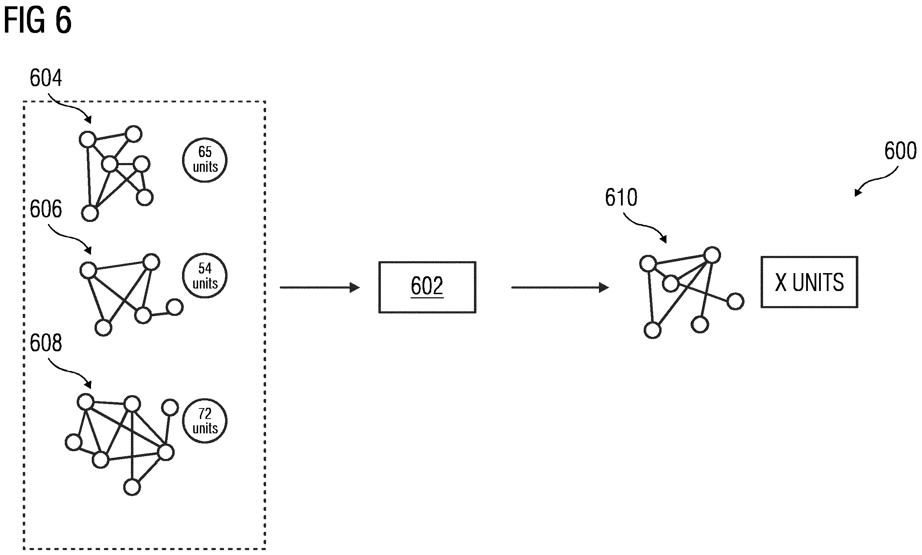

Referring to FIG 6 illustrated is an exemplary machine learning model workflow 600, in accordance with an embodiment of the present invention. Herein, the machine learning model 602 is configured for predicting the performance indicator value such as energy consumption value for an engineering project in an engineering environment. In an example, the machine learning model 602 is trained over a dataset of second knowledge graphs and corresponding pre-determined energy consumption values. It should be understood that the number of datasets shown here are only for explanation and simplification purposes. The present invention is not limited to a number of samples in the training dataset. As maybe seen in the FIG 6, the machine learning model 602 is trained over a first dataset 604 having a pre-determined energy consumption value of 65 units, a second dataset 606 having a pre-determined energy consumption value of 54 units, a third dataset 604 having a pre-determined energy consumption value of 72 units. The machine learning model 602 is configured to learn about parameters that are responsible for consuming a particular value of energy units. Once the machine learning model is trained, it is capable of predicting energy consumption value X units for a dataset value 610 (a sample first knowledge graph 610) as requested by the user. In an example, the X units may be 70 units of energy consumption.

The visualization module 312 is configured for visualizing the performance indicator values associated with one or more physical components in the industrial environment as an information map, wherein the information map comprises multi-layered information clustered into the one or more knowledge graph layers based on the request of the user. As seen in FIG 5, the one or more knowledge graph layers are first knowledge graph layer, second knowledge graph layer, third knowledge graph layer and fourth knowledge graph layer. In an embodiment, in visualizing the performance indicator values as the information map comprises navigating the one or more performance indicator values from plant level data to machine level data by navigating through the one or more knowledge graph layers in the first knowledge graph. It should be understood that the different performance indicator values can be visualized as an information map by superimposing the calculated performance indicator values on each of the one or more physical components as requested by the user. In an example, the first knowledge graph can be visualized in a virtual reality, mixed reality or augmented reality environment.

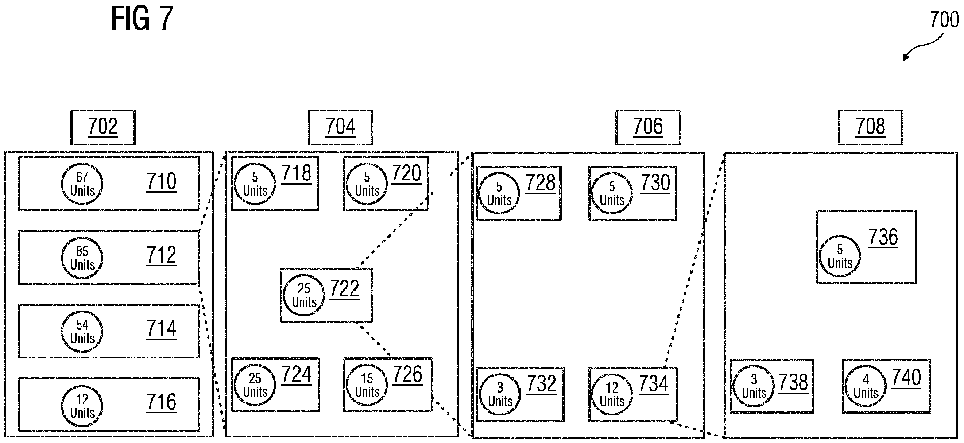

Referring to FIG 7, illustrated is an example of a Graphical User Interface 700 providing performance indicator values at different levels in the technical installation. The performance indicator values pertaining to different physical components can be viewed in a multi-layered manner. As shown, the line level metrics viewed at plant scale is represented by number "702", station level metrics viewed at line scale represented by number "704", cell level metrics viewed at station scale represented by number "706", and machine level metrics viewed at cell scale represented by number "708". In an example, the energy consumption value at each line in the plant is displayed. In an example, the request from the user is to view energy consumption value of different physical components at different scales in the technical installation. The block 702 shows energy consumption values at line from a plant scale point of view that is derived as the first knowledge graph from the second knowledge graph. As shown, the different lines in the plant have varied energy consumption values that is calculated using the machine learning model. The line 710 consumes 65 units of power, line 712 consumes 85 units of power, the line 714 consumes 54 units of power and the line 716 consumes 12 units of power. Further, when the user requests to drill down to view the details of the line 712 at a station level. Then, the first knowledge graph is extracted from the second knowledge graph and the machine learning model is used to further determine the energy consumption value of physical components at station level. As depicted, the station 718 consumes 5 units of power, the station 720 consumes 15 units of power, the station 722 consumes 25 units of power, station 724 consumes 25 units of power, and station 726 consumes 15 units of power. Further, the user may request to drill down to view details of the station 722 at a cell level. Then, again a new first knowledge graph is extracted from the second knowledge graph and the machine learning model is used to further determine energy consumption value of physical components at cell level. As depicted, the cell 728 consumes 5 units of power, the cell 730 consumes 5 units of power, the cell 732 consumes 3 units of power and cell 734 consumes 12 units of power. Further, the user may request to drill down to view details of the cell 736 at a machine level. Then, a new first knowledge graph is extracted from the second knowledge graph and the machine learning models is used to further determine energy consumption values of physical components at machine level. As depicted, the machine 736 consumes 5 units of power, the machine 738 consumes 3 units of power, and the machine 740 consumes 4 units of power. Advantageously, the user is capable of viewing performance metrics at various levels in the plant, thereby enabling easy understanding of data by the user.

Referring to FIG 4, illustrated is an exemplary method 400 for determining one or more performance indicator values for a plurality of physical components in a technical installation to be visualized in a multi-layered manner, in accordance with an embodiment of the present invention.

At step 402, a request to determine one or more performance indicator values associated with one or more physical components in the technical installation is received. The request comprises information regarding performance indicators.

At step 404, one or more physical components associated with the one or more performance indicators are determined based on analysis of an engineering design and corresponding engineering project of the technical installation.

At step 406, first knowledge graph is determined from a second knowledge graph. The second knowledge graph is an integrated knowledge graph having one or more engineering objects representing one or more physical components semantically linked to corresponding engineering programs in an engineering project associated with one or more engineering objects. The first knowledge graph is a sub-graph of the second knowledge graph corresponding to the determined one or more physical components associated with the one or more performance indicators.

At step 408, the requested one or more performance indicator values are determined using a trained machine learning model on the first knowledge graph.

The present invention aims at visualizing performance indicator values or metrics of a technical installation in a multi-layered manner. Furthermore, the present invention is capable of determining one or more performance indicators and representing the same as an information map. For this purpose, the present invention is capable of deriving correlation between a particular performance indicator and the corresponding value of the involved machinery (as captured by sensors/measuring instruments). Advantageously, the present invention provides a method capable of the ability to analyze the combination of all the engineering objects (e.g. hardware, code blocks, libraries) as a single networked system and to present the outcome of this analysis to visualize factory performance metrics in an interactive and intuitive manner. It should be understood though it is apparent that there are multiple metrics that could be calculated based on observed physical quantities such as temperature, pressure etc., the present invention specifically enables to investigate the internals of the automation project and software code. Advantageously, the invention is capable of correlating automation software artefacts to performance metrics. It should be understood that the controller details, code details, and plant details are all represented in a single, scalable knowledge graph along with predicted metrics as requested by the user. Advantageously, the present invention is capable of generating an integrated knowledge graph having information pertaining to the engineering design and the engineering project of the plant. Furthermore, the present invention provides the user to navigate through the entire integrated knowledge graph as information map along with calculated performance metrics based on the requirements of the user.

The present invention may take the form of a computer program product comprising program modules accessible from computer-usable or computer-readable medium storing program code for use by or in connection with one or more computers, processors, or instruction execution system. For the purpose of this description, a computer-usable or computer-readable medium is any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology may be centralized or distributed (or a combination thereof) as known to those skilled in the art.

While the invention has been illustrated and described in detail with the help of a preferred embodiment, the invention is not limited to the disclosed examples. Other variations may be deducted by those skilled in the art without leaving the scope of protection of the claimed invention. 100-industrial environment
102-engineering system
104-network
106-technical installation
108A-N-one or more physical components
110-platform
112-automation module
114-server
116-network interface
118-database
120A-N-client device(s)
122A-N-enginerering tool
202-processor
204-memory
206- storage unit
208-communication interface
210-input-output unit
212-network interface
214-bus
302- a request handler module
304- a second knowledge graph generation module
306- an assessment module
308- a first knowledge graph generation module
310- a performance indicator value prediction module
312- a visualization module
400 - method flowchart for determining one or more performance indicator values for a plurality of physical components in a technical installation to be visualized in a multi-layered manner
500 - exemplary graphical user interface depicting first knowledge graph representing information in a multi-layered manner
502 - a first knowledge graph layer
504 - a second knowledge graph layer
506 - a third knowledge graph layer
508 - a fourth knowledge graph layer
510 - a fifth knowledge graph layer
600 - exemplary machine learning model workflow
700 - exemplary Graphical User Interface providing performance indicator values at different levels in the technical installation

### Bezugszeichenliste / List of references

100-industrial environment
102-engineering system
104-network
106-technical installation
108A-N-one or more physical components
110-platform
112-automation module
114-server
116-network interface
118-database
120A-N-client device(s)
122A-N-enginerering tool
202-processor
204-memory
206- storage unit
208-communication interface
210-input-output unit
212-network interface
214-bus
302- a request handler module
304- a second knowledge graph generation module
306- an assessment module
308- a first knowledge graph generation module
310- a performance indicator value prediction module
312- a visualization module
400 - method flowchart for determining one or more performance indicator values for a plurality of physical components in a technical installation to be visualized in a multi-layered manner
500 - exemplary graphical user interface depicting first knowledge graph representing information in a multi-layered manner
502 - a first knowledge graph layer
504 - a second knowledge graph layer
506 - a third knowledge graph layer
508 - a fourth knowledge graph layer
510 - a fifth knowledge graph layer
600 - exemplary machine learning model workflow
700 - exemplary Graphical User Interface providing performance indicator values at different levels in the technical installation

## Claims

1. A computer-implemented method (400) for determining one or more performance indicator values for a plurality of physical components (108A-108N) in a technical installation (106) to be visualized in a multi-layered manner, the method comprising:
receiving, by a processing unit (202), a request to determine one or more performance indicator values associated with one or more physical components in the technical installation (106), wherein the request comprises information regarding performance indicators;
determining, by the processing unit (202), one or more physical components associated with the one or more performance indicators based on analysis of an engineering design and corresponding engineering project of the technical installation;
determining, by the processing unit (202), a first knowledge graph from a second knowledge graph, wherein the second knowledge graph is an integrated knowledge graph having one or more engineering objects representing one or more physical components semantically linked to corresponding engineering programs in an engineering project associated with one or more engineering objects, and wherein the first knowledge graph is a sub-graph of the second knowledge graph corresponding to the determined one or more physical components associated with the one or more performance indicators;
determining, by the processing unit (202), the requested one or more performance indicator values using a trained machine learning model on the first knowledge graph.

2. The method (400) according any of the claims 1 or 2, further comprises generating the second knowledge graph based on an ontology schema, wherein generating the second knowledge graph comprises:
identifying, by the processing unit (202), a plurality of engineering objects from the engineering design based on an analysis of the engineering design;
identifying, by the processing unit (202), a plurality of code statements from the engineering projects based on an analysis of the engineering projects;
semantically linking, by the processing unit (202), the code statements to corresponding engineering objects based on the one or more rules associated with the one or more relationships between the one or more engineering objects of the engineering design and the one or more engineering programs of the engineering project based on the ontology schema; and
creating, by the processing unit (202), edges from the one or more code statements to corresponding engineering objects based on the semantic linking to generate the second knowledge graph.

3. The method (400) according to any of the preceding claims, wherein the first knowledge graph comprises a plurality of layers, wherein the plurality of layers:
a first knowledge graph layer (502) comprising knowledge associated with the one or more physical components (108A-108N) at a plant level in the technical installation (106);
a second knowledge graph layer (504) comprising knowledge associated with one or more physical components (108A-108N) at a line level in the technical installation (106);
a third knowledge graph layer (506) comprising knowledge associated with one or more physical components (108A-108N) at a station level in the technical installation (106);
a fourth knowledge graph layer (508) comprising knowledge associated with one or more physical components (108A-108N) at a cell level in the technical installation (106); and
a fifth knowledge graph layer (510) comprising knowledge associated with one or more physical components at a machine level in the technical installation (106).

4. The method (400) according to claim 1, further comprising visualizing the performance indicator values associated with one or more physical components in the industrial environment as an information map, wherein the information map comprises multi-layered information clustered into the one or more knowledge graph layers based on the request of the user.

5. The method (400) according to claim 4, wherein visualizing the performance indicator values as the information map comprises navigating the one or more performance indicator values from plant level data to machine level data by navigating through the one or more knowledge graph layers in the first knowledge graph.

6. The method (400) according to any of the preceding claims, wherein the machine learning model (602) is trained to predict the one or more performance indicator values associated with the one or more physical components (108A-108N) based on a correlation between the second knowledge graph and pre-determined performance indicator values corresponding to the one or more physical components, wherein the performance indicator value is calculated based on one or more sensors associated with the one or more physical components.

7. An engineering system (102) for determining one or more performance indicator values for a plurality of physical components (108A-108N) in a technical installation (106) to be visualized in a multi-layered manner, wherein the engineering system comprises:
one or more processor(s) (202); and
a memory (204) coupled to the one or more processor(s), wherein the memory comprises a module stored in the form of machine-readable instructions executable by the one or more processor(s), wherein the module (112) is capable of performing a method according to any of the claims 1 to 6.

8. An industrial environment (100) comprising:
an engineering system (102) as claimed in claim 7;
a technical installation (106) comprising one or more physical components (108A-108N); and
one or more client devices (120A-N) communicatively coupled to the engineering system (102) via a network (104), wherein the engineering system (102) is configured to perform a method according to any of the claims 1 to 6.

9. A computer-program product, having machine-readable instructions stored therein, that when executed by a processor(s) (202), cause the processors to perform a method according to any of the claims 1 to 6.

10. A computer readable medium on which program code sections of a computer program are saved, the program code sections being loadable into and/or executable in a system to make the system execute the method steps according to any of the claims 1 to 6 when the program code sections are executed in the system.
